# EUROPEAN PATENT SPECIFICATION

(11) **EP 1 256 927 B1**
(45) Date of publication and mention of the grant of the patent: **04.07.2007**
(21) Application number: 02291085.5
(22) Date of filing: 30.04.2002
(51) Int. Cl.: G09G 3/36

(54) **Black line insertion in images displayed on tall liquid crystal imagers**
Einfügung von schwarzen Linien in auf grossen Flüssigkristall-Anzeigegeräten dargestellten Bildern
Insertion de lignes noires dans des images affichées sur des grands dispositifs d'affichage à cristaux liquides

(30) Priority: 11.05.2001 US 290538; 14.03.2002 US 99009
(43) Date of publication of application: 13.11.2002
(73) Proprietor: Thomson Licensing, 92100 Boulogne-Billancourt (FR)
(72) Inventor: Willis, Donald Henry, Indianapolis, IN 46250 (US)
(74) Representative: Ruellan-Lemonnier, Brigitte

(56) References cited:
- EP-A- 1 286 202
- US-A- 5 285 192
- US-A- 5 739 867
- US-A- 5 844 539
- US-A- 5 883 609

## Description

### Background of the Invention

### Field of the Invention

This invention relates to the field of projection television receivers and displays in general, and in particular, to projection television receivers and displays utilizing imagers having random row access, for example liquid crystal on silicon (LCOS) imagers.

### Description of Related Art

Liquid crystal imagers, for example LCOS imagers, are often made with more rows than are wanted for a given application. The nature of a liquid crystal imager, particularly a normally white LCOS imager, is that used pixels cannot simply be left blank or empty, but must be driven to the blackest black level possible. It is necessary to write these unwanted rows with a black level as well as write the desired rows with video in order to avoid degradation of the imager. This might be necessary when a picture having a wide screen aspect ratio of 16:9 is displayed using an imager having an aspect ratio of 4:3.

Inserting black rows is usually done by writing all the black rows needed at the top of the picture, followed by writing the desired video rows, followed by writing more black rows at the bottom of the picture. The desired rows are thus written in a shorter time period than they are formed by the incoming signal after it is processed by the formatting circuits. As a result, at least a partial field memory must be used to speed up the desired signal so that there is time to write the black rows. This requires substantial extra memory capacity and memory bandwidth to perform this function.

There is always a need in developing video display systems to reduce memory requirements and bandwidth, so that circuits can be simplified and costs can be reduced.

### Summary of the Invention

Extra rows of an LCOS imager can be written with black in accordance with the inventive arrangements by utilizing an imager with random row access and by speeding up the writing of desired image rows with a line memory and using the time remaining to write the black rows. The rows can be written by writing a black row for every one, two, or three, etc. image rows. The inventive arrangements make it possible to populate the unused rows of the imager at the black level and the active rows of the imager within the same time interval needed to display each field without the use of an unnecessarily large memory.

In a first aspect of the present invention, an black line insertion system for an imager having random row access comprises a speedup line memory for reading out from the memory a plurality of horizontal lines as an output signal at a speed being a predetermined proportion faster than the speed the plurality of horizontal lines are written into the memory, whereby a proportionate time enhancement (further described below) is achieved and means for inserting a black line into the output signal during the proportionate time enhancement of the speedup line memory to provide a modified output signal. The system can include a means for presenting the modified output signal.

In a second aspect of the present invention, a method of modifying an input video signal to accommodate an overly tall imager comprising the steps of increasing the horizontal frequency of a modified output signal by a predetermined ratio, multiplexing an output signal with a black line input signal to provide the modified output signal, wherein the predetermined ratio determines a periodicity of the multiplexed black line input signal, and presenting the modified output signal on the overly tall imager.

In a third aspect of the present invention, a method of modifying an input video signal to accommodate an overly tall imager comprises the steps of reading out from memory a plurality of horizontal lines as an output signal at a speed being a predetermined proportion faster than the speed the plurality of horizontal lines are written into the memory, whereby a proportionate time enhancement is achieved and periodically multiplexing a black line input signal with the output signal during at least a portion of the proportionate time enhancement to provide a modified output signal. The method can also include the step of presenting the modified output signal on the overly tall imager.

In a fourth aspect of the present invention, a method of black line insertion for overly tall imagers having random row access comprises the steps of periodically writing in a predetermined number of input video lines into a memory, speeding up the reading of the predetermined number of input video lines out from said memory to provide a time enhancement, and multiplexing a black input line with the sped-up predetermined number of input video lines during the time enhancement to provide an output image. The method in accordance with this embodiment can further include the step of presenting the output image on the overly tall imager.

### Brief Description of the Drawings

FIG. 1 is a block diagram of a video processing circuit in accordance with the inventive arrangements.
FIG. 2 is a timing diagram useful for explaining the inventive arrangements and the operation of the block diagram in Figure 1.
FIG. 3 is a flow chart illustrating a method in accordance with the present invention.
FIG. 4 is a flow chart illustrating another method in accordance with the present invention.
FIG. 5 is a flow chart illustrating yet another method in accordance with the present invention.

### Detailed Description of the Preferred Embodiments

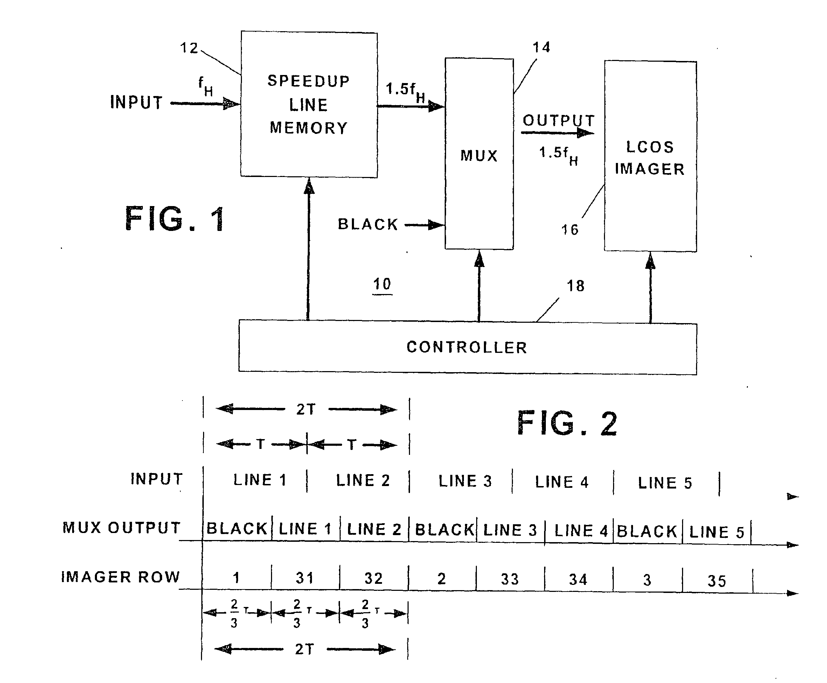

With reference to the video display system 10 shown in FIG.1, the input video is written into a speedup line memory 12. If the speedup factor is 1.5, and the input has a horizontal scanning frequency of f_{H}, for example, the output lines will have a period, for example, of 1/1.5 f_{H}. After 2/3rds of a line is written, the line memory starts to be read out as a first input to a multiplexer 14. The multiplexer selects the reading output of the line memory to be displayed. The multiplexer has a black pixel level as a second input. A controller 18 selects the proper row in the display or imager for the line to be written to the display. The reading speed (reading out of the line memory), as noted, is faster than the writing speed (into the line memory).

After reading out or displaying two lines in this manner, using four-thirds of a line period when a 1.5 speedup factor is employed, the controller instructs the display to write a black row. This black row is displayed for another 2/3 of an input line period. This cycle then repeats, allowing up to one-third of the lines written to be black-insertion lines at the top and bottom of the picture.

A timing diagram in Figure 2 shows the sequence. As line 1 is written into the line memory, a first black line is supplied to row 1 of the imager. Image lines 1 and 2 are supplied to the imager, each in 2/3 of an input line period. Three image lines (two image lines and one black line) are supplied to three rows of the imager in the time it would otherwise take two image lines to be written into the line memory. In a similar fashion, a second black line and image lines 3 and 4, are supplied to the image in the same time period needed to write two lines into the memory. The cycle repeats until the imager is fully loaded with picture data and black lines.

As an alternative, it is possible to write the black rows alternately to the top and bottom of the imager, rather than filling in the top black bar entirely before filling in the lower black bar. It should also be understood within contemplation of the present invention that the black lines could be inserted all on the top or all on the bottom or in a proportion divided between the top and bottom as desired using a random row access imager.

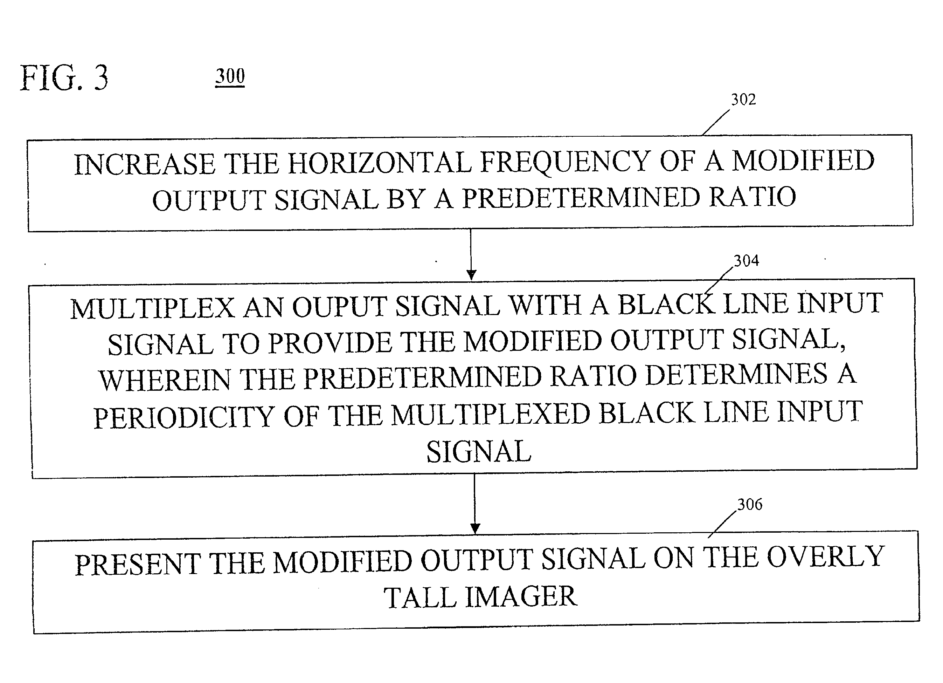

Referring to FIG. 3, a flow chart illustrating a method 300 of modifying an input video signal to accommodate an overly tall imager is shown. Method 300 preferably comprises the step 302 of increasing the horizontal frequency of an output signal by a predetermined ratio, periodically multiplexing at step 304 the output signal with a black line input signal to provide a modified output signal, wherein the predetermined ratio determines a periodicity of the multiplexed black line input signal. The method further comprises the step 306 of presenting the modified output signal on the overly tall imager.

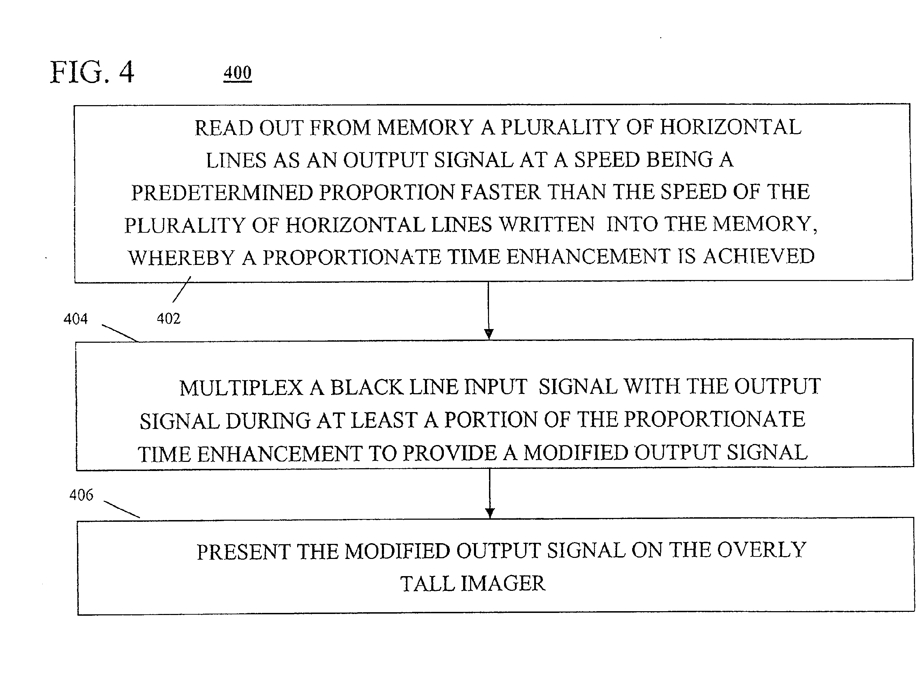

Referring to FIG. 4, a flow chart illustrating a method 400 of modifying an input video signal to accommodate an overly tall imager is shown. The method 400 preferably comprises the step 402 of reading out from memory a plurality of horizontal lines as an output signal at a speed being a predetermined proportion faster than the speed the plurality of horizontal lines are written into the memory, whereby a proportionate time enhancement is achieved. The time enhancement is evident in FIG. 2 by the shortening of time occupied by the first two lines at the output versus the time occupied by the first two lines at the input. At step 404, a black line input signal is periodically multiplexed with the output signal during at least a portion of the proportionate time enhancement to provide a modified output signal. If the predetermined proportion is 3 to 2 for example, then up to a third of a total number of horizontal lines of the overly tall imager can be filled with black lines. At step 406, the modified output signal can then be presented or displayed on the overly tall imager.

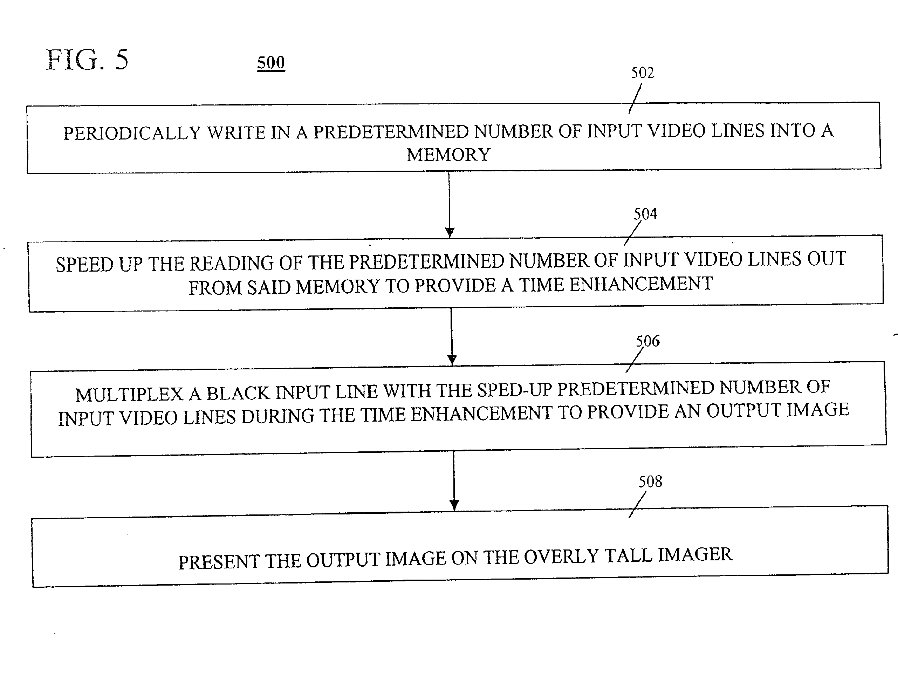

Referring to FIG. 5, a flow chart illustrating yet another method 500 of black line insertion for overly tall imagers having random row access is shown. The method 500 preferably comprises the step 502 of periodically writing in a predetermined number of input video lines into a memory and the step 504 of speeding up the reading of the predetermined number of input video lines out from to memory to provide a time enhancement. The method further comprises the step 506 of multiplexing a black input line with said sped-up predetermined number of input video lines during the time enhancement to provide an output image. Preferably, the step of speeding up includes a speedup factor that will result in an output line period that is inversely proportional to the number of lines in the overly tall imager. Finally, the method can include the step 508 of presenting on the overly tall imager the output image using the random row access of the imager to place the lines in the correct vertical position.

## Claims

1. A random row access imager comprising an image displaying portion comprising a plurality of adjacent image displaying lines of pixels, and at least one non image displaying portion comprising a plurality of adjacent non image displaying lines of pixels, the image displaying portion driven by an image signal and the at least one non image displaying portion driven by a black level signal, the imager **characterized by**
a speedup line memory (12) for storing said image signal and for speeding up reading of said image signal from said memory with respect to writing said image signal to said memory by an amount of time defining a time difference
means (14) for providing a black level signal;
means for selecting (14) between said image signal and said black level signal to provide an output signal having a first component for driving said image displaying portion with said image signal and a second component for driving said at least one non image displaying portion with said black level signal;
means for controlling said selecting means so as to drive said at least one non image displaying portion with said black level signal using said time difference.

2. The system of claim 1, wherein the random row access imager is selected from a group of imagers including liquid crystal on silicon (LCOS), plasma, micromirrors, liquid crystal display, and transmissive liquid crystal display projection.

3. The system of claim 1, wherein said non image displaying portion comprises a first non image portion defining a black bar above said image displaying portion and a second non image image displaying portion defining a black bar below said image displaying portion.

4. The system of claim 3, wherein the means (14) for selecting cooperates with the means for controlling so as to insert black lines alternately in said first non image displaying portion and said second non image displaying portion with respect to said image displaying portion.

5. A method of providing a drive signal for an imager comprising an image displaying portion comprising a plurality of adjacent image displaying lines of pixels, and at least one non image displaying portion comprising a plurality of adjacent non image displaying lines of pixels, the method **characterized by**,
writing into a speedup line memory at a first speed a video signal for driving said image displaying portion;
reading said video signal from said memory at a second speed faster than said first speed by a difference defining a time period;
multiplexing (304;404;506) said video signal read from said memory with a black level so as to drive said image displaying portion with said video signal and to drive, using said time period, said at least one non image portion with the black level signal so as to create at least one black bar adjacent to said image displaying portion.

6. The method of claim 5, wherein the write speed to read speed ratio is 2 to 3 and wherein up to a third of a total number of non image displaying lines of the imager are driven by said black level signal.

7. The method of claim 5, wherein the ratio of said speed of reading to said speed of writing provides an output line period that is inversely proportional to the total number of lines in the imager.

8. The method of claim 5, wherein at least one non image line is driven by a black level for each predetermined number of image lines driven by said video signal input.

## Patentansprüche

1. Zufallszeilenzugriff-Bilderzeuger, der einen Bildanzeigeabschnitt, der mehrere benachbarte Bildanzeigezeilen aus Pixeln aufweist, und wenigstens einen Nichtbild-Anzeigeabschnitt, der mehrere benachbarte Nichtbild-Anzeigezeilen aus Pixeln aufweist, enthält, wobei der Bildanzeigeabschnitt durch ein Bildsignal angesteuert wird und der wenigstens eine Nichtbild-Anzeigeabschnitt durch ein Schwarzpegelsignal angesteuert wird, wobei der Bilderzeuger **gekennzeichnet ist durch**
einen Beschleunigungszeilenspeicher (12) zum Speichern des Bildsignals und zum Beschleunigen des Auslesens des Bildsignals aus dem Speicher in Bezug auf das Schreiben des Bildsignals in den Speicher um einen Zeitbetrag, der eine Zeitdifferenz definiert,
Mittel (14) zum Bereitstellen eines Schwarzpegelsignals;
Mittel (14) zum Wählen zwischen dem Bildsignal und dem Schwarzpegelsignal, um ein Ausgangssignal mit einer ersten Komponente zum Ansteuern des Bildanzeigeabschnitts mit dem Bildsignal und einer zweiten Komponente zum Ansteuern des wenigstens einen Nichtbild-Anzeigeabschnitts mit dem Schwarzpegelsignal zu schaffen; und
Mittel zum Steuern der Wählmittel, um so den wenigstens einen Nichtbild-Anzeigeabschnitt unter Verwendung der Zeitdifferenz mit dem Schwarzpegelsignal anzusteuern.

2. System nach Anspruch 1, wobei der Zufallszeilenzugriff-Bilderzeuger aus einer Gruppe von Bilderzeugern ausgewählt ist, die Flüssigkristall-auf-Silicium (LCOS), Plasma, Mikrospiegel, Flüssigkristallanzeige und Durchlass-Flüssigkristallanzeige-Projektion umfasst.

3. System nach Anspruch 1, wobei der Nichtbild-Anzeigeabschnitt einen ersten Nichtbild-Abschnitt, der einen schwarzen Streifen über dem Bildanzeigeabschnitt definiert, und einen zweiten Nichtbild-Bildanzeigeabschnitt, der einen schwarzen Streifen unter dem Bildanzeigeabschnitt definiert, umfasst.

4. System nach Anspruch 3, wobei die Wählmittel (14) mit den Steuermitteln zusammenwirken, um schwarze Zeilen abwechselnd in den ersten Nichtbild-Anzeigeabschnitt und in den zweiten Nichtbild-Anzeigeabschnitt in Bezug auf den Bildanzeigeabschnitt einzufügen.

5. Verfahren zum Bereitstellen eines Ansteuerungssignals für einen Bilderzeuger, der einen Bildanzeigeabschnitt mit mehreren benachbarten Bildanzeigezeilen aus Pixeln und wenigstens einen Nichtbild-Anzeigeabschnitt mit mehreren benachbarten Nichtbild-Anzeigezeilen aus Pixeln umfasst, wobei das Verfahren **gekennzeichnet ist durch** die folgenden Schritte:
Schreiben eines Videosignals zum Ansteuern des Bildanzeigeabschnitts in einen Beschleunigungszeilenspeicher mit einer ersten Geschwindigkeit;
Auslesen des Videosignals aus dem Speicher mit einer zweiten Geschwindigkeit, die um eine Differenz, die eine Zeitperiode definiert, höher als die erste Geschwindigkeit ist;
Multiplexieren (304; 404; 506) des aus dem Speicher ausgelesenen Videosignals mit einem Schwarzpegel, um den Bildanzeigeabschnitt mit dem Videosignal anzusteuern und um unter Verwendung der Zeitperiode den wenigstens einen Nichtbild-Abschnitt mit dem Schwarzpegelsignal anzusteuern, um wenigstens einen schwarzen Streifen angrenzend an den Bildanzeigeabschnitt zu erzeugen.

6. Verfahren nach Anspruch 5, wobei das Verhältnis der Schreibgeschwindigkeit zur Lesegeschwindigkeit 2 zu 3 ist und wobei bis zu einem Drittel der Gesamtzahl von Nichtbild-Anzeigezeilen des Bilderzeugers durch das Schwarzpegelsignal angesteuert wird.

7. Verfahren nach Anspruch 5, wobei das Verhältnis der Lesegeschwindigkeit zu der Schreibgeschwindigkeit eine Ausgangszeilenperiode schafft, die zu der Gesamtzahl von Zeilen in dem Bilderzeuger umgekehrt proportional ist.

8. Verfahren nach Anspruch 5, wobei wenigstens eine Nichtbild-Zeile durch einen Schwarzpegel für jede vorgegebene Anzahl von Bildzeilen, die durch das eingegebene Videosignal angesteuert werden, angesteuert wird.

## Revendications

1. Imageur à accès aléatoire aux lignes comportant une partie de visualisation d'image comprenant une pluralité de lignes de pixels adjacentes de visualisation d'image, et au moins une partie de non visualisation d'image comprenant une pluralité de lignes de pixels adjacentes de non visualisation d'image, la partie de visualisation d'image étant commandée par un signal d'image et la ou les partie(s) de non visualisation d'image étant commandée(s) par un signal de niveau noir, l'imageur étant **caractérisé par** :
une mémoire de lignes d'accélération (12) pour enregistrer ledit signal d'image et pour accélérer la lecture dudit signal d'image dans ladite mémoire par rapport à l'écriture dudit signal d'image dans ladite mémoire d'une durée définissant une différence de temps ;
un moyen (14) de génération du signal de niveau noir ;
un moyen de sélection (14) entre ledit signal d'image et ledit signal de niveau noir pour générer un signal de sortie dont une première composante sert à commander ladite partie de visualisation d'image avec ledit signal d'image et une deuxième composante sert à commander ladite ou lesdites partie(s) de non visualisation avec ledit signal de niveau noir ;
un moyen de commande dudit moyen de sélection de façon à commander ladite ou lesdites partie(s) de non visualisation d'image avec ledit signal de niveau noir en utilisant ladite différence de temps.

2. Système selon la revendication 1, dans lequel l'imageur à accès aléatoire aux lignes est sélectionné à partir d'un groupe d'imageurs dans lequel on trouve les cristaux liquides sur silicium (LCOS - liquid crystal on silicium), les plasmas, les micromiroirs, les affichages à cristaux liquides et les projections d'affichages à cristaux à transmission.

3. Système selon la revendication 1, dans lequel ladite partie de non visualisation d'image comporte une première partie de non image définissant une barre noire au-dessus de ladite partie de visualisation d'image et une deuxième partie de non visualisation d'image définissant une barre noire en dessous de ladite partie de visualisation d'image.

4. Système selon la revendication 3, dans lequel le moyen de sélection 14 agit en coopération avec le moyen de commande pour insérer des lignes noires en alternance dans ladite première partie de non visualisation d'image et ladite deuxième partie de non visualisation d'image par rapport à ladite partie de visualisation d'image.

5. Procédé de génération d'un signal de commande d'un imageur comportant une partie de visualisation d'image comprenant une pluralité de lignes de pixels adjacentes de visualisation d'image et au moins une partie de non visualisation d'image comprenant une pluralité de lignes de pixels adjacentes de non visualisation d'image, le procédé étant **caractérisé par**,
l'écriture dans une mémoire à lignes d'accélération à une première vitesse d'un signal vidéo pour commander ladite partie de visualisation d'image ;
la lecture du dit signal vidéo dans ladite mémoire à une deuxième vitesse supérieure à la première, leur différence définissant une durée ;
le multiplexage (304 ; 404 ; 506) dudit signal vidéo lu dans ladite mémoire avec un signal de niveau noir de façon à commander ladite partie de visualisation d'image avec ledit signal vidéo et à commander, en utilisant ladite durée, ladite ou lesdites partie(s) de non image avec le signal de niveau noir de façon à créer au moins une barre noire adjacente à ladite partie de visualisation d'image.

6. Procédé selon la revendication 5, dans lequel le rapport de la vitesse d'écriture à la vitesse de lecture a une valeur comprise entre 2 et 3 et dans lequel jusqu'à un tiers du nombre total des lignes de non visualisation d'image de l'imageur est commandé par ledit signal de niveau noir.

7. Procédé selon la revendication 5, dans lequel le rapport de ladite vitesse de lecture à ladite vitesse d'écriture donne une période de line de sortie qui est inversement proportionnelle au nombre total de lignes de l'imageur.

8. Procédé selon la revendication 5, dans lequel au moins une ligne de non image est commandée par un signal de niveau noir pour chaque nombre prédéterminé de lignes d'image commandées par ledit signal d'entrée vidéo.
